# EUROPEAN PATENT SPECIFICATION

(11) **EP 1 666 196 B1**
(45) Date of publication and mention of the grant of the patent: **02.09.2009**
(21) Application number: 04747662.7
(22) Date of filing: 16.07.2004
(51) Int. Cl.: B23Q 3/06, B23Q 3/18

(54) **CLAMP DEVICE**
KLEMMVORRICHTUNG
DISPOSITIF DE SERRAGE

(30) Priority: 08.08.2003 JP 2003290377
(43) Date of publication of application: 07.06.2006
(73) Proprietor: Kosmek Ltd., Kobe-shi, Hyogo 651-2241 (JP)
(72) Inventor: HARUNA, Yosuke, Kosnek Ltd., Kobe-shi, Hyogo 651-2241 (JP)
(74) Representative: Horton, Andrew Robert Grant
(86) International application number: PCT/JP2004/010196
(87) International publication number: WO 2005/014225

(56) References cited:
- JP-A- 8 155 770
- JP-A- 11 333 649
- JP-A- 2001 038 564
- JP-A- 2002 361 533
- JP-A- 2003 039 264
- JP-A- 2003 311 572

## Description

The present invention relates to a clamping apparatus, more particularly, relating to an apparatus for clamping a movable member such as a work pallet on a reference member such as a table of a machine tool.

### Background Art

This kind of clamping apparatus is described in, for example, the document JP-A-S54-17580. As illustrated in Figure 1 thereof, the clamping apparatus is constituted in such a way that a plurality of work reference pieces and movable clamping claws are attached to a jig, the work reference pieces are provided with a stationary clamp reference surface, and a worked surface of a workpiece is allowed to come into close contact with and be supported on the stationary clamp reference surface. The jig is fastened on the bed of a machine tool. A jet hole is drilled at the center of the stationary clamp reference surface on an upper end of each work reference piece, and the jet hole is communicatively connected to a compressed air source.

With this structure, it is possible to sweep away swarf produced during machine work by jet flow from the jet hole, thereby, when the workpiece is clamped, the swarf is prevented from being caught between the stationary clamp reference surface and the worked surface of the workpiece.

### Summary of the Invention

However, in the above-mentioned structure, it is impossible to detect whether a proper clamping is performed or not, namely, a clamping such that the worked surface of the workpiece completely comes into close contact with the stationary clamp reference surface. For example, even when foreign matter such as swarf is not completely removed by the jet flow from the jet hole, but caught between the stationary clamp reference surface and the worked surface to develop a gap, the gap cannot be detected.

As a result, machine work may continue without interruption of the process even when the above-described abnormal clamping occurs. Therefore, machining accuracy is reduced or there is trouble such as breakage of tools in an extreme case.
The invention is broadly defined in the independent claim which is characterised relative to JP-A-11333649.

The problems to be solved by the present invention are described above, next, an explanation is made for means for solving these problems and effects.

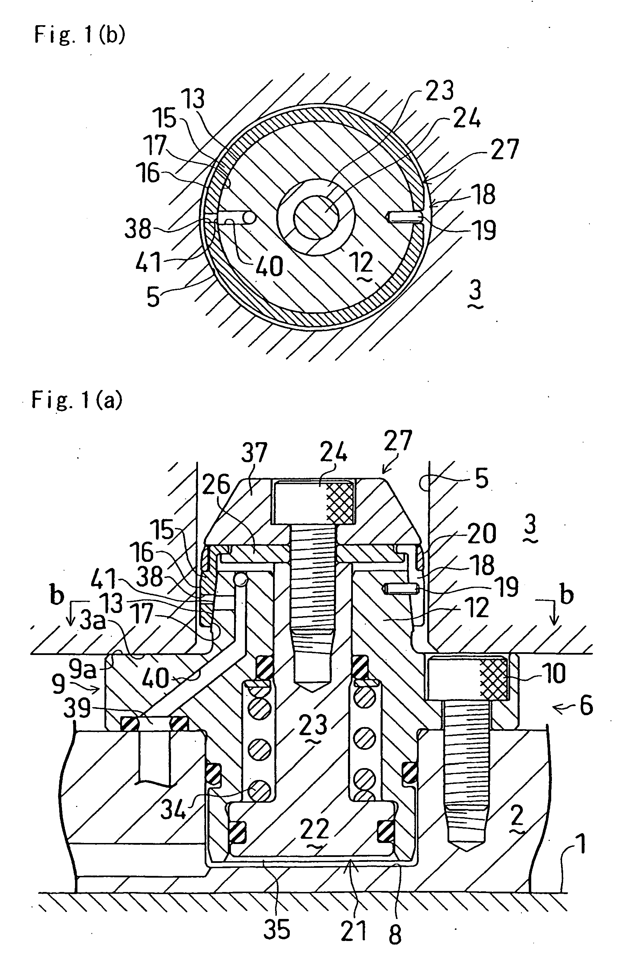

The present invention is constituted in such a way that, as illustrated in Fig. 1(a) and Fig. 1(b) for example, a central pillar 12 is projected from a reference member 2 so as to be inserted into a hole 5 opened in a movable member 3, the central pillar 12 is provided with an inclined outer surface 13 that gets closer to the axis toward a leading end of the projecting direction, an annular intermediate member 15 in which at least a part of the circumferential direction is allowed to deform in both the expanding direction and contracting direction is arranged at the outside of the inclined outer surface 13, the intermediate member 15 is provided with a straight outer surface 16 allowed to fit to an inner peripheral surface of the hole 5 and with an inclined inner surface 17 facing the inclined outer surface 13, a pull member 21 is inserted into the central pillar 12 axially movably, and the pull member 21 is connected to the intermediate member 15, a lock means and a release means are provided in the reference member 2, the lock means moves the intermediate member 15 via the pull member 21 toward a base end for locking and the release means moves the intermediate member 15 via the pull member 21 toward the leading end for releasing, a fluid flow hole 38 is opened in the straight outer surface 16 of the intermediate member 15, and when the intermediate member 15 moves for locking and the straight outer surface 16 comes into close contact with the inner peripheral surface of the hole 5, the fluid flow hole 38 is closed by the inner peripheral surface of the hole 5.

Herein, the "clamping apparatus" refers to an apparatus capable of attaching and detaching the movable member 3 to and from the reference member 2, and also restricting at least one axial movement of the movable member 3 in relation to the reference member 2.

With this structure, it is possible to judge whether or not the straight outer surface 16 of the intermediate member 15 comes into close contact with the inner peripheral surface of the hole 5 by checking the pressure at the fluid flow hole 38. Therefore, in such a case that foreign matter such as swarf is caught between the straight outer surface 16 of the intermediate member 15 and the inner peripheral surface of the hole 5 to develop a gap, it is possible to properly detect the gap, thereby a structure suitable for an automatic control can be obtained.

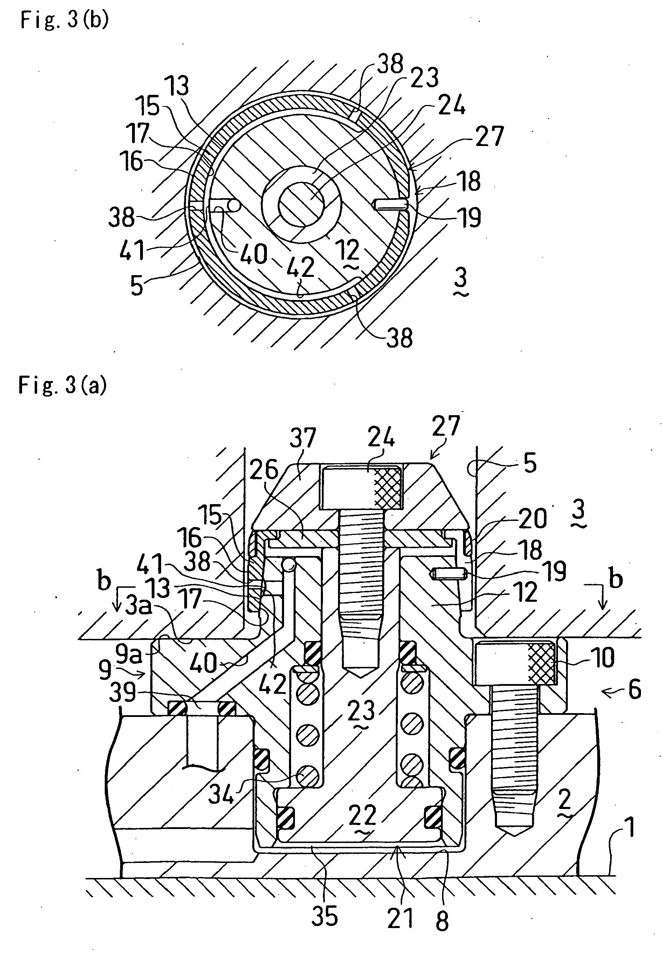

Herein, as illustrated in Fig. 3(b) for example, it is preferable that the fluid flow holes 38 are provided in plurality and particularly provided circumferentially in plurality. With these structures, it is possible to improve the reliability of detecting an abnormal clamping.

Herein, as illustrated in Fig. 1(a) and Fig. 1(b) for example, it is preferable that a housing 9 provided in the reference member 2 is provided with a fluid port 39 for supplying pressurized fluid or discharging fluid, a fluid passage 40 is provided inside the housing 9 and the fluid passage 40 is connected to the fluid port 39, the fluid passage 40 is provided with a relay opening 41 in the inclined outer surface 13 of the central pillar 12, and the fluid flow hole 38 is provided so that one end is opened in the straight outer surface 16 and the other end is opened in the inclined inner surface 17 respectively, and the other end faces the relay opening 41. With this structure, it is possible to easily detect whether an abnormal clamping occurs or not by checking the pressure on the fluid port 39 side.

It is noted that, as illustrated in Fig. 3(b) for example, it is preferable that the fluid passage 40 is communicatively connected to a groove 42 formed in the circumferential direction in at least either the inclined outer surface 13 of the central pillar 12 or the inclined inner surface 17 of the intermediate member 15, and each of the openings of the fluid flow holes 38 on the inclined inner surface 17 side faces the groove 42. In this structure, a mechanically simple fluid passage can be obtained because the fluid passage 40 is branched at the groove 42 in the circumferential direction and communicatively connected to each of the fluid flow holes 38.

### Brief Description of the Drawings

Fig. 1(a) is an elevated cross-sectional view showing a released state of the clamping apparatus according to a first embodiment of the present invention;
Fig. 1(b) is a cross-sectional view indicated by the arrow b - b in Fig. 1(a);
Fig. 2(a) is an elevated cross-sectional view showing a locked state of the clamping apparatus;
Fig. 2(b) is a cross-sectional view indicated by the arrow b - b in Fig. 2(a);
Fig. 3(a) is an elevated cross-sectional view showing a released state of the clamping apparatus according to a second embodiment of the present invention;
Fig. 3(b) is a cross-sectional view indicated by the arrow b - b in Fig. 3(a); and
Fig. 4 is a plain cross-sectional view of the clamping apparatus in which the axis of the plug portion is misaligned with the axis of the positioning hole and one of the jet holes is closed, and similar to Fig. 3(b).

### Explanation of References

2: base plate (reference member)
3: work pallet (movable member)
5: positioning hole (hole)
9: reference block (housing)
13: tapered outer surface (inclined outer surface)
15: intermediate member
16: fitting surface
17: tapered inner surface (inclined inner surface)
21: pull member
27: plug portion
38: jet hole (fluid flow hole)
39: air supply port (fluid port)
40: air passage (fluid passage)
41: relay opening
42: communication groove (groove, passage)

First, an explanation will be made for a first embodiment of the present invention by referring to Fig. 1(a) through Fig. 2(b).

As illustrated in Fig. 1(a), an automatic positioning apparatus (clamping apparatus) of the present embodiment is constituted in such a way that, a base plate 2 as a reference member is placed on a table 1 of a machine tool, and a supported surface 3a of a work pallet 3 as a movable member is received on a support surface 9a of a reference block 9 as a housing to be fixed on the base plate 2. The automatic positioning apparatus is also constituted in such a way that, when the supported surface 3a is received on the support surface 9a, the work pallet 3 is positioned in the horizontal direction with the work pallet 3 aligned in relation to the base plate 2.

On a lower surface of the work pallet 3 is formed the supported surface 3a, and in the supported surface 3a are opened circular positioning holes 5 machined precisely in plurality. A plug means 6 is provided on the base plate 2 in correspondence to each of the positioning holes 5. It is noted that, here, only one set among a plurality of sets composed of both the positioning holes 5 and the plug means 6 is illustrated.

An explanation is made for the structure of the plug means 6. As illustrated in Fig. 1(a), an installation hole 8 is opened in an upper surface of the base plate 2, the reference block 9 is fixed to the base plate 2 by a fastening bolt 10 so as to be partially buried into the installation hole 8. A central pillar 12 is integrally formed with the reference block 9 so as to be projected from the reference block 9 upward, and the central pillar 12 is allowed to be inserted into the positioning hole 5 formed in the work pallet 3. The axis of the central pillar 12 substantially coincides with the axis of the installation hole 8.

On an outer periphery of the central pillar 12 is formed an inclined outer surface 13 in such a manner that the inclined outer surface 13 gradually gets closer to the axis upward (toward a leading end of the central pillar 12).

Outside the central pillar 12 is arranged an annular intermediate member 15. The intermediate member 15 is formed in a cylindrical shape and is adapted to be elastically deformable radially outwardly by providing one slit 18 in its peripheral wall. The intermediate member 15 is adapted to be restorable radially inwardly by its own elastic restoring force.

Outside the intermediate member 15 is fitted a seamlessly-formed outer ring 20, by which foreign matter such as swarf is prevented from entering the inside of a plug portion 27 described later via the slit 18.

On an outer peripheral surface of the intermediate member 15 is formed a straight outer surface 16 which is allowed to come into close contact with an inner peripheral surface of the positioning hole 5. Meanwhile, on an inner peripheral surface of the intermediate member 15 is formed an inclined inner surface 17 which faces the inclined outer surface 13 of the central pillar 12. As well as the inclined outer surface 13 is, the inclined inner surface 17 is also formed in such a manner that the inclined inner surface 17 gradually gets closer to the axis upward (toward the leading end of the central pillar 12).

It is noted that a pin 19 is radially projected from the outer peripheral surface of the central pillar 12, and a projected portion of the pin 19 is inserted into the slit 18 of the intermediate member 15, by which the rotation of the intermediate member 15 is prohibited.

On the reference block 9 is supported a pull member 21 movably along the axial direction of the central pillar 12. The pull member 21 is composed of a piston 22 hermetically inserted into a lower part of the reference block 9, a piston rod 23 integrally formed with the piston 22 and projected upward from the piston 22 and axially inserted into an axial hole of the central pillar 12, a cap 37 fixed on an upper portion of the piston rod 23 by a bolt 24 and a flat ring 26 attached between a lower surface of the cap 37 and an upper end surface of the piston rod 23.

As illustrated in Fig. 1(a), on an outer peripheral surface of the ring 26 is formed a collar portion, and into an annular groove formed by the collar portion and the cap 37 is fitted an upper flange formed at an upper portion of the intermediate member 15. As described, the pull member 21 and the intermediate member 15 are connected to each other.

Inside the reference block 9 is provided a lock means and a release means. The lock means thereamong is composed of both the piston 22 and a coil spring-like urging spring 34 arranged on the upper side of the piston 22. The release means thereamong is composed of both the piston 22 and an hydraulic chamber 35 provided for releasing formed on the lower side of the piston 22.

In the above-described present embodiment, a plug portion 27 of the present invention is composed of the central pillar 12, the cap 37, the intermediate member 15, the ring 26 and the like. The plug portion 27 is projected from the base plate 2 so as to be inserted into the positioning hole 5. The straight outer surface 16, which is the outer peripheral surface of the intermediate member 15 forms an outer peripheral surface of the plug portion 27, namely forms a fitting surface which is allowed to come into close contact with the inner peripheral surface of the positioning hole 5.

On the fitting surface (straight outer surface) 16 is opened a jet hole 38 as a fluid flow hole. The jet hole 38 is adapted to be closed by the inner peripheral surface of the positioning hole 5 when the fitting surface 16 comes into close contact with the inner peripheral surface of the positioning hole 5 of the work pallet 3 during a locking operation described later.

It is noted that at a lower surface of the reference block 9 is provided an air supply port 39 as a fluid port, and in the inclined outer surface 13 of the central pillar 12 is formed a relay opening 41. And the air supply port 39 and the relay opening 41 are communicatively connected to each other via an air passage 40 formed inside the reference block 9. Then the jet hole 38 formed in the intermediate member 15 is opened so as to radially penetrate the intermediate member 15, more specifically, so that one end is opened in the straight outer surface 16 and the other end is opened in the inclined inner surface 17 respectively, and the other end faces the relay opening 41.

The above-described automatic positioning apparatus operates as follows. In the released state illustrated in Fig. 1(a) and Fig. 1(b), pressurized oil has been supplied to the hydraulic chamber 35, by which the piston 22 has ascended with the piston rod 23 against an urging force of the urging spring 34, and the intermediate member 15 has ascended as well. As a result, the state of the intermediate member 15 has been switched into a radially contracted state. Here, between an upper end surface of the central pillar 12 and a lower surface of the ring 26 is formed a contact gap.

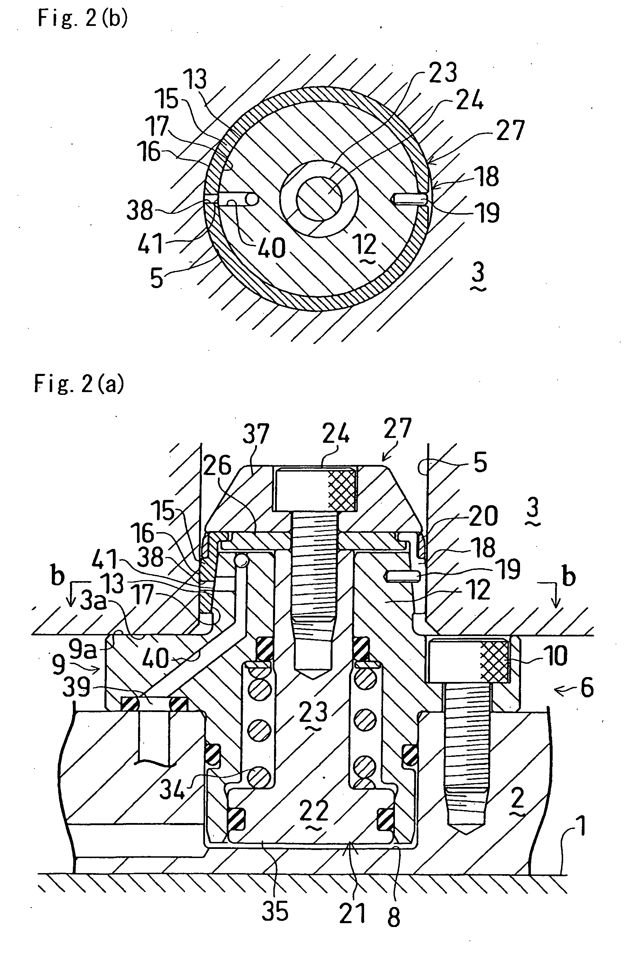

To position the work pallet 3 in relation to the base plate 2 in this released state, first, as illustrated in Fig. 1(a), the work pallet 3 is lowered by any appropriate means (not illustrated), the intermediate member 15 is inserted into the positioning hole 5, and the supported surface 3a of the work pallet 3 is brought into contact with the support surface 9a of the reference block 9. By discharging the pressurized oil of the hydraulic chamber 35 in this state, the piston 22 is lowered by the urging force of the urging spring 34, and the intermediate member 15 is also strongly moved downward (toward the base end of the central pillar 12) for locking. Thereby, as illustrated in Fig. 2(a) and Fig. 2(b), the state of the intermediate member 15 is switched into an radially expanded state, and the straight outer surface 16, which is the outer peripheral surface of the intermediate member 15, comes into close contact with the inner peripheral surface of the positioning hole 5. As a result, the horizontal fixation (above-described alignment) of the work pallet 3 is performed. It is noted that during the locking operation, the intermediate member 15 is desirably prevented from descending by more than a predetermined range by the contact between the lower surface of the ring 26 and the upper end surface of the central pillar 12.

The locked state is allowed to develop as described above and the work pallet 3 can be positioned and clamped in relation to the base plate 2. However, in such a case that swarf produced during machine work and the like is adhered on the inner peripheral surface of the positioning hole 5, there may be a possible abnormal clamping, that is a clamping with the swarf caught between the inner peripheral surface of the positioning hole 5 and the straight outer surface 16 of the intermediate member 15 during the above-mentioned clamping operation.

However, in the present embodiment, since the jet hole 38 is provided on the straight outer surface 16, it is possible to properly detect the above-mentioned abnormal clamping by introducing compressed air into the air supply port 39 of the reference block 9 after the clamping operation.

That is, in a case that clamping operation has properly performed, namely, in the case that the straight outer surface 16 has come into close contact with the inner peripheral surface of the positioning hole 5 and the jet hole 38 is closed by the inner peripheral surface of the positioning hole 5, air leakage from the jet hole 38 can be prevented or kept to a minimum level, resulting in that the pressure increases inside the air supply port 39. By checking the increase of the pressure using a pressure sensor (not illustrated), it is possible to recognize that the clamping operation has been properly conducted.

Meanwhile, in a case that a gap is left between the straight outer surface 16 and the inner peripheral surface of the positioning hole 5 for some reason, for example, due to swarf caught therebetween, compressed air leaks from the jet hole 38 via the gap in great quantity, resulting in that the pressure inside the air supply port 39 does not increase. By measuring the pressure at the air supply port 39, it is possible to recognize that some abnormal clamping operation has been performed in a case that the pressure at the air supply port 39 is lower than a predetermined value.

Particularly, the plug means 6 of the present embodiment is, as previously described, constituted in such a way that the plug portion 27 is inserted into the positioning hole 5 and the outer peripheral surface of the plug portion 27 is brought into close contact with the inner peripheral surface of the positioning hole 5 to perform clamping. Therefore, during the clamping operation, since the plug portion 27 is concealed inside the positioning hole 5, it is completely impossible or extremely difficult to visually confirm whether an appropriate clamping operation is performed or not from the outside. In this respect, with the structure presented as the present embodiment, it is possible to reliably detect whether the clamping operation is properly performed or not on the basis of the pressure inside the air supply port 39.

The explanation has been made for the operation to switch the state from the released state into the locked state, on the contrary, to switch from the locked state into the released state, pressurized oil is supplied to the hydraulic chamber 35 in the state illustrated in Fig. 2(a). Thereby, the piston rod 23 ascends with the piston 22 against the urging force of the urging spring 34, and the intermediate member 15 moves upward (toward the leading end of the central pillar) for releasing, resulting in that the intermediate member 15 radially contracts by its own elastic restoring force, and the locked state is released. Thereafter, the work pallet 3 is allowed to be raised by any appropriate means.

The first embodiment of the present invention is as described above; however, this embodiment can be changed as described below.

The structure presented in the first embodiment is constituted in such a way that compressed air is supplied to the air supply port 39 and the air is jetted from the jet hole 38, however, the structure may also be constituted in such a way that air is sucked into the jet hole 38 using vacuum drawing at the air supply port 39. Namely, the port numbered 39 (fluid port) is regarded as a fluid suction port and the hole numbered 38 (fluid flow hole) is regarded as a fluid suction hole. This structure is advantageous in a case where a clamping apparatus is installed, for example, in a clean room where dust-free conditions are needed. However, the structure presented as the first embodiment where the compressed air is supplied to the air supply port 39 is more advantageous than the structure using vacuum drawing where the pressure cannot be made lower than 0 atm (Zero atm) because the structure presented as the first embodiment is constituted in such a way that compressed air at a high pressure (for example 10 atm or higher) is supplied to the air supply port 39 so as to reliably detect a slight gap.

The intermediate member 15 presented as the first embodiment may be provided with a plurality of radial through grooves opened alternately on an upper surface and a lower surface of its peripheral wall and the plurality of radial through grooves are arranged in the circumferential direction, instead of provided with the one slit 18 in its peripheral wall. The intermediate member 15 may also be constituted with a plurality of divided members arranged in the circumferential direction. In addition, it is not necessary to form substantially the entire circumference of the peripheral wall of the intermediate member 15 so as to be deformable radially outward and radially inward, instead, it is possible to form at least a part of the circumference of the peripheral wall of the intermediate member 15 so as to be deformable radially outward and radially inward.

The central pillar 12 may be indirectly engaged with the intermediate member 15 via another member, instead of that the central pillar 12 is directly engaged with the intermediate member 15 as presented.

It is noted that it is preferable that the plug means 6 is provided with a cleaning means and that a contacting part of the support surface 9a with the supported surface 3a, the inner peripheral surface of the positioning hole 5, the straight outer surface 16 of the intermediate member 15, the engaged surfaces between the central pillar 12 and the intermediate member 15 and the like are cleaned using pressurized fluid such as compressed air, nitrogen, cutting oil and the like.

Here, it is possible that to blow off the swarf and the like described above, more specifically, to clean the inner peripheral surface of the positioning hole 5 and the straight outer surface 16 of the intermediate member 15 and the like using compressed air jetted out from the jet hole 38 by supplying the compressed air to the air supply port 39 before the compressed oil in the hydraulic chamber 35 is discharged (namely, before the locking operation). In this instance, a mechanically simple plug means 6 can be obtained by forcing the above-mentioned compressed air (compressed fluid) supplied to the air supply port 39 which is used to detect an abnormal clamping serves as the cleaning fluid. And, in a case where the jet hole 38 is clogged by foreign matter such as swarf, the foreign matter can be blown out and removed by jetting air from the jet hole 38 before the straight outer surface 16 comes into close contact with the inner peripheral surface of the positioning hole 5. Therefore, the above-mentioned structure has an advantage of avoiding such a problem that the blockage of the jet hole 38 is undesirably detected as a proper clamping due to the increase of the pressure on the air supply port 39 side.

As a matter of course, another jet hole for the cleaning fluid may be formed in the outer peripheral surface of the plug portion 27 besides the above-mentioned jet hole 38 formed in the outer peripheral surface 16 of the intermediate member 15, and the cleaning fluid may be jetted out from the added jet hole. The jet hole for the cleaning fluid can be formed by branching the air passage 40. Further, a port exclusively for the cleaning fluid may be formed on the reference block 9, and the added jet hole for the cleaning fluid may be connected to the port via a passage other than the air passage 40.

In the above embodiment, the pressurized fluid supplied to the air supply port 39 is (compressed) air, however, different fluid may also be available. For example, cutting oil and the like may be supplied to the jet hole 38 instead of the above-described air.

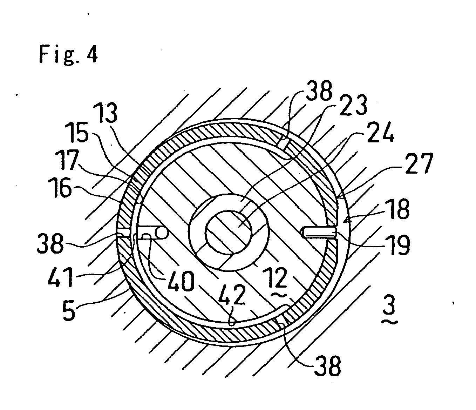

An explanation will be made for a second embodiment by referring to Fig. 3(a), Fig. 3(b) and Fig. 4. Fig. 3(a) is an elevated cross-sectional view showing a released state of the clamping apparatus according to the second embodiment of the present invention, and Fig. 3(b) is a cross-sectional view indicated by the arrow b - b in Fig. 3(a). Fig. 4 is a plain cross-sectional view of the clamping apparatus in which the axis of the plug portion is misaligned with the axis of the positioning hole and one of the jet holes is closed, and similar to Fig. 3(b). In this second embodiment, components similar to those of the above-mentioned first embodiment will be designated and described by the same numerals as a general rule.

The structure of the second embodiment is different from that of the first embodiment in that the jet holes 38 are provided circumferentially in plurality on the outer peripheral surface of the plug portion 27. Hereinafter the second embodiment will be explained.

As illustrated in Fig. 3(a) and Fig. 3(b), on the outer peripheral surface (the inclined outer surface 13) of the central pillar 12 is provided a communication groove (communicative passage) 42 in the shape of an arc when viewed on a plane. At the middle of the communication groove 42 is formed the relay opening 41, which is one end of the air passage 40.

As illustrated in Fig. 3(b), the jet holes 38 are provided in three in the intermediate member 15 circumferentially at the same intervals. Each of these three jet holes 38 is opened in such a way that one end is opened in the straight outer surface 16 and the other end is opened in the inclined inner surface 17. The other end of each of the jet holes 38 faces the communication groove 42.

With the above-described structure, compressed air supplied to the air supply port 39 is supplied to the communication groove 42 from the relay opening 41 via the air passage 40, and the compressed air is divided among the three jet holes 38, then the divided compressed air is jetted out from each of the jet holes 38.

Since the jet holes 38 are provided in plurality in the present embodiment, even when one of the jet holes 38 is clogged by swarf for example, as long as the remaining jet holes 38 are closed by the inner peripheral surface of the positioning hole 5, the pressure on the air supply port 39 side increases, otherwise as long as the remaining jet holes 38 are not closed by the inner peripheral surface of the positioning hole 5, the pressure on the air supply port 39 side does not increase. Namely, as long as all of the plurality of the jet holes 38 are not closed by foreign matter, the pressure on the air supply port 39 side does not increase, resulting in that the above-mentioned state is properly detected as an abnormal clamping. With the above-mentioned structure, the detection reliability is improved and the frequency of wrong detection is reduced.

Particularly, in the present embodiment, since the jet holes 38 are provided circumferentially in plurality, a state illustrated in Fig. 4 can also be reliably detected as an abnormal clamping. Fig. 4 shows a case where an expected locking operation is not performed due to some causes such as a failure in hydraulic equipment. As illustrated in Fig. 4, there may be a case where although the straight outer surface 16 does not come into close contact with the inner peripheral surface of the positioning hole 5, since a misalignment occurs between the axis of the plug portion 27 and the axis of the positioning hole 5 accidentally or due to foreign matter caught between the straight outer surface 16 and the inner peripheral surface of the positioning hole 5, one of the plurality of the jet holes 38 (that illustrated on the left side in Fig. 4) is brought into contact with the inner peripheral surface of the positioning hole 5 and closed therefore. In the structure of the first embodiment (Fig. 1(b)), if the above-described single jet hole 38 is closed, the pressure increases on the air supply port 39 side, resulting in a wrong detection that a normal clamping seems to be performed. However, in the second embodiment, even when the state illustrated in Fig. 4 is found, the remaining two jet holes 38 are not closed and the pressure on the air supply port 39 side does not increase, thereby it is possible to reliably detect an abnormal clamping.

It is noted that the structure of the present embodiment may also be constituted in such a way that compressed air is supplied to the air supply port 39 not only in the above-described locked state but also in the released state so as to confirm that the straight outer surface 16 does not come into close contact with the inner peripheral surface of the positioning hole 5. The above-described structure of the second embodiment is available for the structure mentioned above as well. More specifically, in the released state, as illustrated in Fig. 4, there may be a case where although the straight outer surface 16 does not come into close contact with the inner peripheral surface of the positioning hole 5, since a misalignment occurs between the axis of the plug portion 27 and the axis of the positioning hole 5 accidentally or due to foreign matter caught between the straight outer surface 16 and the inner peripheral surface of the positioning hole 5, one of the plurality of the jet holes 38 (that illustrated on the left side in Fig. 4) is brought into contact with the inner peripheral surface of the positioning hole 5 and closed by accident. In the structure of the first embodiment (Fig. 1(b)), if the above-described single jet hole 38 is closed, the pressure on the air supply port 39 side increases, resulting in a wrong detection that an abnormal releasing operation seems to be performed. However, in the second embodiment, even when the state illustrated in Fig. 4 is found, the remaining two jet holes 38 are not closed and the pressure on the air supply port 39 side does not increase, thereby it is possible to correctly detect that the straight outer surface 16 does not come into close contact with the inner peripheral surface of the positioning hole 5.

Further, the structure of the present embodiment is constituted in such a way that the air passage 40 extending from the air supply port 39 is branched via the communication groove 42 in the circumferential direction and communicatively connected to each of the jet holes 38, thereby it is not necessary to check the pressure at each of the jet holes 38. An abnormal clamping can be detected only by checking the pressure on the air supply port 39 side, thus a mechanically simple fluid passage and a mechanically simple structure for detecting the pressure can be obtained.

In the second embodiment, the jet holes 38 are provided in three but may be provided in two or in four or more. Further, the communication groove 42 may be provided on the inclined inner surface 17 of the intermediate member 15, instead of provided on the inclined outer surface 13 of the central pillar 12.

## Claims

1. A clamping apparatus, wherein
a central pillar (12) projects from a reference member (2) so as to be inserted into a hole (5) opened in a movable member (3); and
an annular intermediate member (15) is arranged outside the central pillar, the annular intermediate member (15) having a straight outer surface (16) allowed to fit to an inner peripheral surface of the hole (5);
***characterised in that**:*
the central pillar (12) is provided with an inclined outer surface (13) that gets closer to the axis toward a leading end of the projecting direction,
the annular intermediate member (15), of which at least a part of the circumference is allowed to deform in both the expanding direction and contracting direction, has an inclined inner surface (17) facing the inclined outer surface (13) of the central pillar (12),
a pull member (21) is inserted into the central pillar (12) axially movably, and the pull member (21) is connected to the intermediate member (15),
a lock means and a release means are provided in the reference member (2), the lock means moves the intermediate member (15) via the pull member (21) toward a base end for locking and the release means moves the intermediate member (15) via the pull member (21) toward the leading end for releasing; and
a fluid flow hole (38) is opened in the straight outer surface (16) of the intermediate member (15), and when the intermediate member (15) moves for locking and the straight outer surface (16) comes into close contact with the inner peripheral surface of the hole (5), the fluid flow hole (38) is closed by the inner peripheral surface of the hole (5).

2. A clamping apparatus according to claim 1 wherein there is a plurality of fluid flow holes (38).

3. A clamping apparatus according to claim 2 wherein the fluid flow holes (38) are provided circumferentially in plurality.

4. A clamping apparatus according to claim 1, wherein
a housing (9) provided in the reference member (2) is provided with a fluid port (39) for supplying pressurized fluid or discharging fluid,
a fluid passage (40) is provided inside the housing (9) and the fluid passage (40) is connected to the fluid port (39),
the fluid passage (40) is provided with a relay opening (41) in the inclined outer surface (13) of the central pillar (12), and
the fluid flow hole (38) is provided so that one end is opened in the straight outer surface (16) and the other end is opened in the inclined inner surface (17) respectively, and the other end faces the relay opening (41).

5. A clamping apparatus according to claim 4 wherein the fluid flow holes (38) are provided circumferentially in plurality,
the fluid passage (40) is communicatively connected to a groove (42) formed in the circumferential direction in at least either the inclined outer surface (13) of the central pillar (12) or the inclined inner surface (17) of the intermediate member (15), and
each of the openings of the fluid flow holes (38) on the inclined inner surface (17) side faces the groove (42).

## Patentansprüche

1. Spannvorrichtung, wobei
eine zentrale Stütze (12) von einem Bezugselement (2) so vorsteht, dass sie in ein sich in ein bewegliches Element (3) öffnendes Loch (5) eingesetzt wird; und
ein ringförmiges Zwischenelement (15) außerhalb der zentralen Stütze angeordnet ist, wobei das ringförmige Zwischenelement (15) eine gerade Außenfläche (16) aufweist, die an einer Innenumfangsfläche des Lochs (5) anliegen kann;
**dadurch gekennzeichnet, dass**:
die zentrale Stütze (12) mit einer geneigten Außenfläche (13) versehen ist, die in Richtung eines Vorderendes der Vorstehrichtung näher an die Achse gelangt,
das ringförmige Zwischenelement (15), bei welchem zumindest ein Teil des Umfangs sich sowohl in der Ausdehnungsrichtung als auch der Zusammenziehrichtung verformen lässt, eine geneigte Innenfläche (17) aufweist, die der geneigten Außenfläche (13) der zentralen Stütze (12) zugewandt ist,
ein Zugelement (21) in die zentrale Stütze (12) axial beweglich eingesetzt ist und das Zugelement (21) mit dem Zwischenelement (15) verbunden ist,
ein Verriegelungsmittel und ein Lösemittel im Bezugselement (2) vorgesehen sind, wobei das Verriegelungsmittel zum Verriegeln das Zwischenelement (15) über das Zugelement (21) in Richtung eines Basisendes bewegt und das Lösemittel zum Lösen das Zwischenelement (15) über das Zugelement (21) in Richtung des Vorderendes bewegt; und
ein Fluidströmungsloch (38) in der geraden Außenfläche (16) des Zwischenelements (15) mündet und, wenn sich das Zwischenelement (15) zum Verriegeln bewegt und die gerade Außenfläche (16) mit der Innenumfangsfläche des Lochs (5) in engen Kontakt kommt, das Fluidströmungsloch (38) durch die Innenumfangsfläche des Lochs (5) geschlossen wird.

2. Spannvorrichtung nach Anspruch 1, wobei eine Vielzahl von Fluidströmungslöchern (38) vorhanden sind.

3. Spannvorrichtung nach Anspruch 2, wobei die Fluidströmungslöcher (38) in einer Vielzahl am Umfang vorgesehen sind.

4. Spannvorrichtung nach Anspruch 1, wobei
ein im Bezugselement (2) vorgesehenes Gehäuse (9) mit einer Fluidöffnung (39) zum Zuführen von Druckfluid oder Auslassen von Fluid versehen ist,
ein Fluiddurchgang (40) innerhalb des Gehäuses (9) vorgesehen ist und der Fluiddurchgang (40) mit der Fluidöffnung (39) verbunden ist,
der Fluiddurchgang (40) mit einer Übertragungsöffnung (41) in der geneigten Außenfläche (13) der zentralen Stütze (12) versehen ist, und
das Fluidströmungsloch (38) so vorgesehen ist, dass jeweils ein Ende in der geraden Außenfläche (16) geöffnet ist und das andere Ende in der geneigten Innenfläche (17) geöffnet ist und das andere Ende der Übertragungsöffnung (41) zugewandt ist.

5. Spannvorrichtung nach Anspruch 4, wobei die Fluidströmungslöcher (38) in einer Vielzahl am Umfang vorgesehen sind,
der Fluiddurchgang (40) kommunikativ mit einer Nut (42) verbunden ist, die in der Umfangsrichtung in mindestens entweder der geneigten Außenfläche (13) der zentralen Stütze (12) oder der geneigten Innenfläche (17) des Zwischenelements (15) ausgebildet ist, und
jede der Öffnungen der Fluidströmungslöcher (38) auf der Seite der geneigten Innenfläche (17) der Nut (42) zugewandt ist.

## Revendications

1. Dispositif de blocage, dans lequel :
une colonne centrale (12) s'étend à partir d'un élément de référence (2) de manière à être insérée dans un orifice (5) débouchant sur un élément mobile (3) ; et
un élément annulaire intermédiaire (15) est agencé à l'extérieur de la colonne centrale, l'élément annulaire intermédiaire (15) comportant une surface externe droite (16) pouvant s'assembler sur une surface périphérique interne de l'orifice (5);
**caractérisé en ce que** :
la colonne centrale (12) comporte une surface externe inclinée (13) qui se rapproche de l'axe vers une extrémité avant dans la direction d'extension,
l'élément annulaire intermédiaire (15), dont au moins une partie de la circonférence peut se déformer dans la direction d'expansion et la direction de contraction, présente une surface interne inclinée (17) faisant face à la surface externe inclinée (13) de la colonne centrale (12),
un élément de traction (21) est inséré dans la colonne centrale (12) de manière à pouvoir se déplacer axialement, et l'élément de traction (21) est relié à l'élément intermédiaire (15),
un moyen de verrouillage et un moyen de libération sont agencés sur l'élément de référence (2), le moyen de verrouillage déplace l'élément intermédiaire (15) par l'intermédiaire de l'élément de traction (21) vers une extrémité de base afin d'assurer le verrouillage et le moyen de libération déplace l'élément intermédiaire (15) par l'intermédiaire de l'élément de traction (21) vers l'extrémité avant afin d'assurer la libération ; et
un orifice d'écoulement de fluide (38) débouche sur la surface externe droite (16) de l'élément intermédiaire (15), et lorsque l'élément intermédiaire (15) se déplace afin d'assurer le verrouillage et que la surface externe droite (16) entre en contact étroit avec la surface périphérique interne de l'orifice (5), l'orifice d'écoulement de fluide (38) est obturé par la surface périphérique interne de l'orifice (5).

2. Dispositif de blocage selon la revendication 1, dans lequel est agencée une pluralité d'orifices d'écoulement de fluide (38).

3. Dispositif de blocage selon la revendication 2, dans lequel les orifices d'écoulement de fluide (38) sont agencés circonférentiellement en une pluralité.

4. Dispositif de blocage selon la revendication 1, dans lequel
un logement (9) formé dans l'élément de référence (2) comporte un orifice de fluide (39) destiné à délivrer un fluide pressurisé ou à évacuer un fluide,
un passage de fluide (40) est formé à l'intérieur du logement (9) et le passage de fluide (40) est relié à l'orifice de fluide (39),
le passage de fluide (40) comporte une ouverture relais (41) sur la surface externe inclinée (13) de la colonne centrale (12), et
l'orifice d'écoulement de fluide (38) est agencé de telle sorte qu'une extrémité débouche sur la surface externe droite (16) et l'autre extrémité débouche respectivement sur la surface interne inclinée (17), et l'autre extrémité est orientée face à l'ouverture relais (41).

5. Dispositif de blocage selon la revendication 4 dans lequel les orifices d'écoulement de fluide (38) sont agencés circonférentiellement en une pluralité,
le passage de fluide (40) est raccordé de manière à pouvoir communiquer à une rainure (42) formée dans la direction circonférentielle sur au moins l'une de la surface externe inclinée (13) de la colonne centrale (12) ou de la surface interne inclinée (17) de l'élément intermédiaire (15), et
chacune des ouvertures des orifices d'écoulement de fluide (38) du côté de la surface interne inclinée (17) est orientée face à la rainure (42).
